# EUROPEAN PATENT APPLICATION

(11) **EP 0 628 761 A1**
(43) Date of publication of application: **14.12.1994**
(21) Application number: 93109385.0
(22) Date of filing: 11.06.1993
(51) Int. Cl.: F16N 31/00

(54) **Collecting container for residual oil of motor vehicles**

(71) Applicant: C. PLASTICA SNC di Camoli Mauro & C., I-40023 Castel Guelfo (Bologna) (IT)
(72) Inventor: Camoli, Marco, I-40023 Castel Guelfo (Bologna) (IT)
(74) Representative: Sassatelli, Franco T., Dr.

(57) **Abstract**

The plastic container (1) foresees an inside space (2) with three ducts communicated with outside: an inlet duct (3) and a vent duct (4) both with screw thread and a third outlet duct (5) with external thread. The inlet duct and the vent duct (4) to be closed with blind nipples (6 and 7) with upper gripping tongues and the outlet (5) to be closed with a gripping nipple (8) with inside thread. For using the invented means, with the inlet duct (3) and the vent duct (4) opened the container (1) is put under the vehicle having the attention to put the inlet duct (3) approximately in vertical correspondence with the oil exhaust foresees in the motor vehicle. Opened said oil exhaust of the motor the residual oil comes to fall down into the converging potting (9) and then it comes to the inside space (2) of the container (1) through the inlet duct (3). When all the residual oil is collected, the container (1) can be manually lifted by means of its handle (11) and it is gravitationally discharged opening the outlet duct (5) by unscrewing its nipple (8).

## Description

The invention refers to a container with an inside space to be closed for collecting the residual oils of the motor, particularly to be used by the driver of the motor vehicle, which can be directly used to collect the residual oil from the motor and to keep the same inside said container so permitting its transport to a pre-arranged point for its right disposal. The invented container can be used to whoever acts with motor vehicles, for their servicing of other, and when he has not access to the services of resiual oils collecting.

The invention resolves a working problem for whoever must change the used oil into one's own motor vehicle. To avoid big ecological damages which come to put into the conventional discharges of into the sewerages said residual goods highly polluting, the laws in force impose to the sector companies, such as petrol stations or repairing stations, to use suited means to recover the residual oils. Said residual oils are normally collect from the repairing stations or other points by a firm commited to this collecting service. This collecting oil problem, which now is not more present between the sector workers, is instead present for the operator no ables to have access to these services and in particular for the ordinary driver who is going to change the motor oil of his own vehicle. At present to do this it is necessary as a first step to put a collecting basin on the ground under the oil exhaust of the motor of the vehicle, to open said exhaust and, when the oil flow is ended, to take the basin and, grasping it and by means of a funnel, to pour the oil into a container which can be closed such as a plastic tank to permit the ordinary transport to suited collecting point. It is easy to understand the working difficulty of the above cited sequence in particular for the ordinary operator, such is to be consider the driver, who besides to have a lot of difficulties will end by dirtying himself. Moreover it must be considered that this current sequence needs of three means: a basin for the oil collecting, a funnel for the pouring off and a tank for the oil transport, means that, on the base ot their particular use, cannot be used for other sevices and consequently theyself come to form polluting means. The invented means permits a solution of this current problem foreseen a new means to be used as a first step as collecting means to be put on the ground, under the body vehicle, for the residual oil and then as container to be manually closed and to be transported to the residual oil collecting point. Consequently it is avoided the possibility of dirty oneself, such it is not more used a basin and it does not need the oil pouring off by the basin to the transport tank, it is avoided the environment dispersion of said two polluting means and moreover three working means are replaced with only one means. The invented means relates to a plastic container 1 with inside space 2 foreseen three ducts communicated with outside: an inlet duct 3 and a vent duct 4 both with screw thread and a third outlet duct 5 with external thread.

The inlet duct 3 and the vent duct 4 to be closed with blind nipples 6 and 7 with upper gripping tongues and the outlet duct 5 to be closed with a gripping nipple 8 with inside thread. For using the invented means, with the inlet duct 3 and the vent duct 4 opened the container 1 is put under the vehicle having the attention to put the inlet duct 3 approximately in vertical correspondence with the oil exhaust foresees in the motor vehicle. Opened said oil exhaust of the motor the residual oil comes to fall down into the potting 9 converging to the central inlet duct 3 with its upper part delimited by the border 10 and then the oil comes to the inside space 2 of the container 1 through the inlet duct 3. When all the residual oil is collected, the container 1 is taken out from the vehicle and, by means of cleaning on its plane surfaces with paper or other, the residual oil eventually presents onto the converging potting 9 is taken away.

Then by means of the nipples 6 and 7 the inside space 2 is closed.

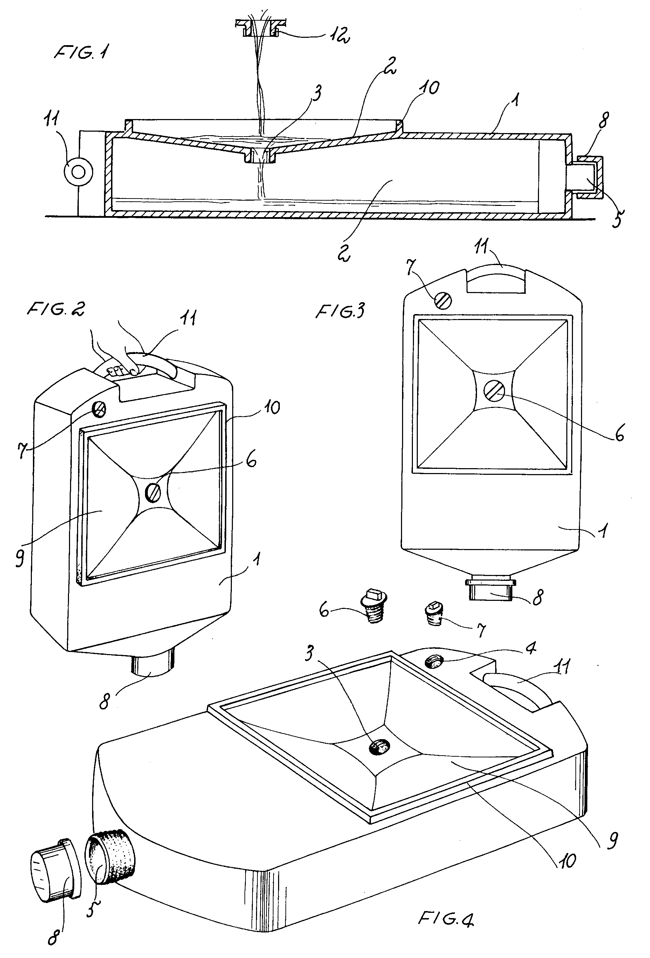

In this situation the container 1 can be lifted manually by means of its handle 11 and it can be transported to the residual oil collecting point. In said collecting point the oil into the container 1 can be discharged gravitationally opening the inside space 2 by unscrewing of the nipple 8 which opens the outlet duct 5. To avoid the cleaning of the residual oil on the potting 9, after that the oil is fallen down into the inside space 2, in a version can be used as auxiliary means of the container 1 a funnel to be disposed into the inlet duct 3 and with its potting shape equal to the converting potting 9 to permit the funnel positioning on the potting surface. Using the described sequences it is possible to collect the residual oul without dirtying the person of other working means. The invented container is illustrated in schematic view in the drawings of sheet 1. Fig. 1 is longitudinal section view of the container 1 on the ground and during the inlet phase of the residual oil which flows down from the conduit 12 of the motor vehicle. It is noted the falling of said oil in the centre of the converging potting 9 from which, through the inlet duct 3, the same oil comes into the inside space 2. Fig. 2 is view of the container 1 already closed and manually supported by means of its handle 11 so to point out its transport possibility. Fig. 3 is frontal view of the same container of fig. 2. Fig. 4 is perspective view of the same container 1 already illustrated to the previous figures with the three nipples 6, 7 and 8 in exploded view. The container is realized in preferred embodiment in plastic material but it can be foreseen also in other materials.

## Claims

1. Collecting container for residual oil of the motor vehicles in plastic material with inside space (2) equipped with three ducts communicated with outside: a first screw thread inlet duct (3), a second screw thread vent duct (4) and a third outlet duct (5) with external thread; the first inlet duct (3) to be closed with blind nipple (6) with upper gripping tongue , the second vent duct (4) to be closed with blind nipple (7) with upper gripping tongue and the outlet duct (5) to be closed with a gripping nipple (8) with inside thread; with potting (9) converging to the central inlet duct (3) with its upper part delimited by a border (10); characterized in that for using, with the inlet duct (3) and the vent duct (4) opened, the container is put on the ground under the vehicle having the attention to put the inlet duct (3) approximately in vertical correspondence with the oil exhaust foresees in the motor vehicle; opened the oil exahaust of the motor the residual oil comes to fall down into the converging potting (9) and it comes to the inside space (2) of the container (1) through the inlet duct (3); when all residual oil is collected and after to have taken out the container (1), the inside space (2) is closed by means of nipples (6 and 7).

2. Collecting container for residual oil of the motor vehicles, according to claim 1), in which the residual oil eventually presents onto the converging point (9) is taken away by means of paper or other.

3. Collecting container for residual oil of the motor vehicles, according to claim 1), where the container (1) can be manually lifted by means of its handle (11) and it can be transported to the residual oil collecting point.

4. Collecting container for residual oil of the motor vehicles, according to claim 1), characterized by that within the collecting point the oil into the container (1) can be gravitationally discharged opening the inside space (2) by unscrewing the nipple (8) opens the outlet duct (5).

5. Collecting container for residual oil of the motor vehicles, according to claim 1), in that to avoid the cleaning of the residual oil on the potting (9), after that the oil is fallen down into the inside space (2), can be used as auxiliary means a funnel to be disposed into the inlet duct (3) and with its potting shape equal to the converting potting (9) to permit the funnel positioning on the potting surface.
